# EUROPEAN PATENT APPLICATION

(11) **EP 0 843 489 A1**
(43) Date of publication of application: **20.05.1998**
(21) Application number: 97309056.6
(22) Date of filing: 11.11.1997
(51) Int. Cl.: H04Q 3/72, H04M 1/57

(54) **Method of handling caller identification for telephone calls**

(30) Priority: 11.11.1996 GB 9623429
(71) Applicant: TELEFONAKTIEBOLAGET LM ERICSSON, 126 25 Stockholm (SE)
(72) Inventor: Pennington, Neil, Brighton, Sussex BN2 3ET (GB)
(74) Representative: O'Connell, David Christopher

(57) **Abstract**

A telephone subscriber is able to control whether his telephone number is transmitted to the called party when he makes a call, by setting up a list of numbers from which his own number will always be withheld, without requiring specific action in connection with each individual call.

## Description

### TECHNICAL FIELD OF THE INVENTION

This invention relates to the way in which a telephone subscriber, when making a call, is able to control whether or not his telephone number is released to the called party.

### DESCRIPTION OF RELATED ART

With modern telephone networks, it is common for the telephone number of a calling subscriber to be transmitted to a called subscriber. Depending upon the equipment being used by the called subscriber, that subscriber may be able to view the telephone number of the calling subscriber before deciding whether or not to accept the call, or the called subscriber may be able to determine the number of the calling subscriber after completion of the call, or may be able to return a call immediately to the original calling party.

It is also possible, if a calling subscriber so wishes, for his telephone number to be withheld from all called parties, either permanently or for a preset time period. Alternatively, the calling subscriber may take steps before a particular telephone call, to withhold his telephone number from the called party in that case. For example, in the United Kingdom, a calling subscriber can withhold his telephone number from the called party by dialling "141" before making the call. In the ETSI standard, the calling subscriber requests the service Calling Line Identification Restriction.

However, these known solutions have the disadvantage that the calling subscriber must first remember to access the relevant service before making a particular call, and must also remember exactly how to access that service.

United States Patent No. 5,412,711 discloses a further solution which attempts to overcome these known disadvantages. In the United States patent, every time a call is initiated from the calling party, he receives a message enquiring whether or not he wishes his telephone number to be withheld from the called party, and the number is then transmitted or not, depending upon the answer given by the calling subscriber.

However, this has the disadvantage that, every time he makes a telephone call, the calling party must deal with such an enquiry.

### SUMMARY OF THE INVENTION

The invention is concerned with overcoming the problems discussed above in connection with the known solutions, namely that, in order to be sure that he withholds his telephone number whenever he wishes to do so, a calling party must either remember to take the necessary action, for every such call, or must withhold his number even where he has no particular wish to do so, or must deal with an enquiry whenever he wishes to make a call to any other subscriber.

The present invention is based upon the idea that a calling subscriber is allowed to preset the numbers of some called subscribers from which his own number will always be withheld and/or the numbers of some called subscribers to which his own number will always be transmitted, without requiring-any action in connection with each individual call.

### BRIEF DESCRIPTION OF THE DRAWINGS

Figure 1 is a schematic illustration of a network operating in accordance with the invention.

Figure 2 is a flow chart explaining the handling of a call in accordance with the invention.

Figures 3-5 are a series of flow charts illustrating the procedures required to use the system in accordance with the invention.

### DETAILED DESCRIPTION OF PREFERRED EMBODIMENTS

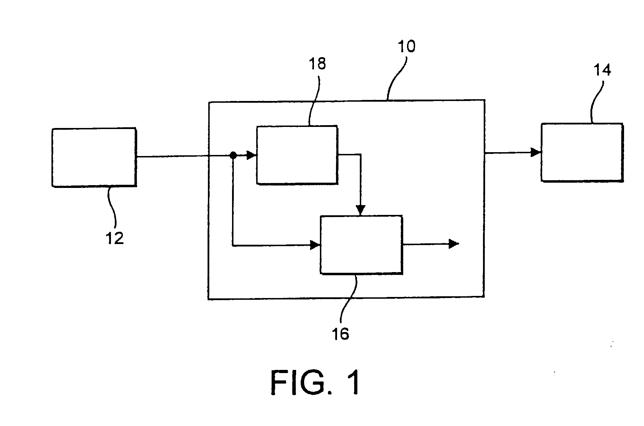

Figure 1 shows a network 10, having a subscriber 12 connected thereto. In this case, the subscriber 12 wishes to make a call to a called party 14. The connection is made in a switch 16 in the exchange 10, which routes a call from subscriber 12 to called party 14.

The exchange 10 also includes a processing unit 18, which includes a memory and a comparison device. When the subscriber 12 dials the number of the called party 14, the processing unit 18 compares this number with a list of numbers previously stored by the subscriber 12. If the number of the called party 14 appears on the list, the processing unit 18 controls the switch 16 such that the telephone number of the subscriber 12 is not transmitted to the called party 14. Otherwise, if the number of the called party 14 does not appear on a list associated with the subscriber 12, the telephone number of the subscriber 12 is transmitted to the called party 14.

As described above, it will be noted that the default is that the number is transmitted to the called party, and is only withheld if the number of the called party appears on a list. It is of course possible for the system to be controlled such that the default is for the number to be withheld, and that the number is transmitted only if the number of the called party appears on a list of numbers stored by the subscriber.

It should also be noted that, as with conventional systems, the number may be transmitted or withheld in accordance with instructions given by the subscriber immediately before the call is made.

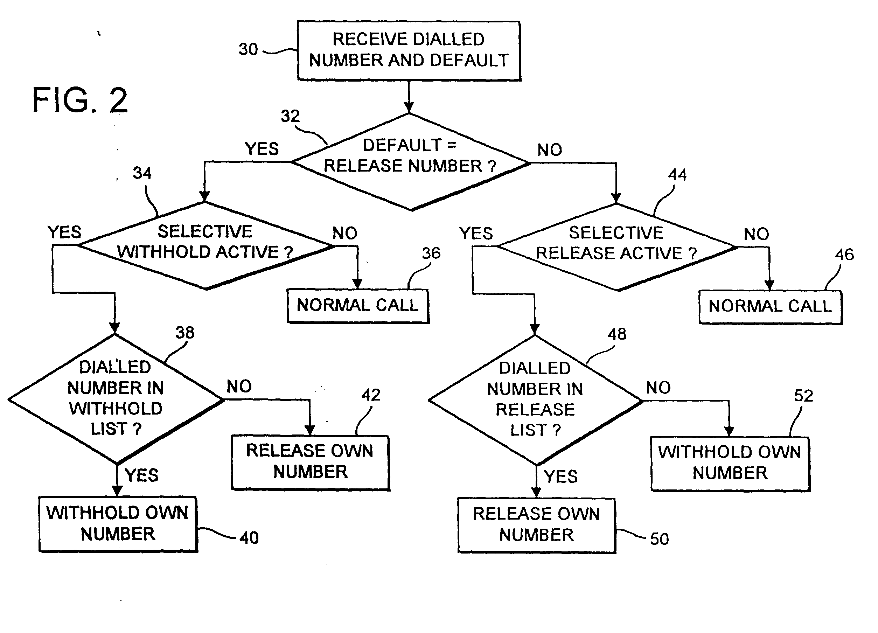

Figure 2 is a flow chart explaining how such a call is handled in a telephone exchange.

In step 30, the exchange receives the number of the called party, dialled by the subscriber, and also receives an indication as to whether the default is that the number of the subscriber should be transmitted to or withheld from the called party. In step 32, this default information is interrogated, to determine whether the default is that the number should be released. If it is determined in step 32 that the default is that the number should be released, the method proceeds to step 34, where it is determined whether the subscriber has activated the selective withholding service, that is, whether the subscriber has set up a list of numbers from which his own number should be withheld. If not, the method goes to step 36, and the call proceeds normally. If the subscriber has activated this service, the method proceeds to step 38. There, the dialled number is compared with the numbers in the list stored by the subscriber. If there is a match, the method proceeds to step 40, and the subscriber's number is withheld from the called party. If, on the other hand, the dialled number is not in the stored list, the method proceeds to step 42, and the subscriber's number is released to the called party.

If the answer to the question in step 32 is NO, that is the default is that the number is transmitted to the called party, the method proceeds to step 44. There, it is determined whether the subscriber has activated the selective release service, that is has set up a list of called parties to which his number will be released. If the answer is NO, the method proceeds to step 46, and the call proceeds normally. If the subscriber has activated this service, the method proceeds to step 48, where it is determined whether the dialled number of the called party appears in the list of numbers to which the subscriber's number will be released. If it does, the method proceeds to step 50, and the subscriber's number is released to the called party. If, on the other hand, the dialled number does not appear in this list, the subscriber's number is withheld from the called party, as indicated in step 52.

As described above, it is determined in step 32 whether the default for the calling subscriber is that the number should be transmitted to, or withheld from, the called party. The default setting may be determined by the network, or it may be alterable by each subscriber. Where the default setting is alterable by the subscriber, the subscriber may choose to set up two lists of numbers, a first list of numbers from which his own number is to be withheld when the default is that the number should normally be released, and a second list of numbers to which his own number should be released when the default is set such that the number is normally withheld. The ability to store two lists in this way allows a user to change easily between the two possible default settings, without needing to re-enter the numbers in the respective lists.

As described above, the list or lists of telephone numbers, from which the calling subscriber's number is to be withheld, or to which the calling subscriber's number is to be transmitted, are stored in the local exchange, to which the subscriber is connected. This allows quick access to the list or lists. However, it will be appreciated that the lists may also be stored centrally, within the telephone network.

Moreover, another possibility would be for the list or lists of telephone numbers to be stored within the subscriber's own equipment, whether that be a private branch exchange (PBX), or a telephone which has suitable intelligence. In that case, the decision as to whether the number should be withheld or released is made in the customer's own equipment. For example, when the default for the network is that a number should be transmitted, unless it is specifically withheld, and the only way of withholding a number is to enter a specific digit combination before making a particular call, the subscriber's telephone equipment may contain means for comparing a dialled number with a list of numbers from which the subscriber's own number is to be withheld. If the dialled number appears on such a list, the equipment may be programmed to send the dialled number to the telephone exchange together with the specific digit combination required to activate the procedure for withholding the number. This allows the user to obtain the benefits of the present invention, without requiring the network itself to provide the function for all subscribers.

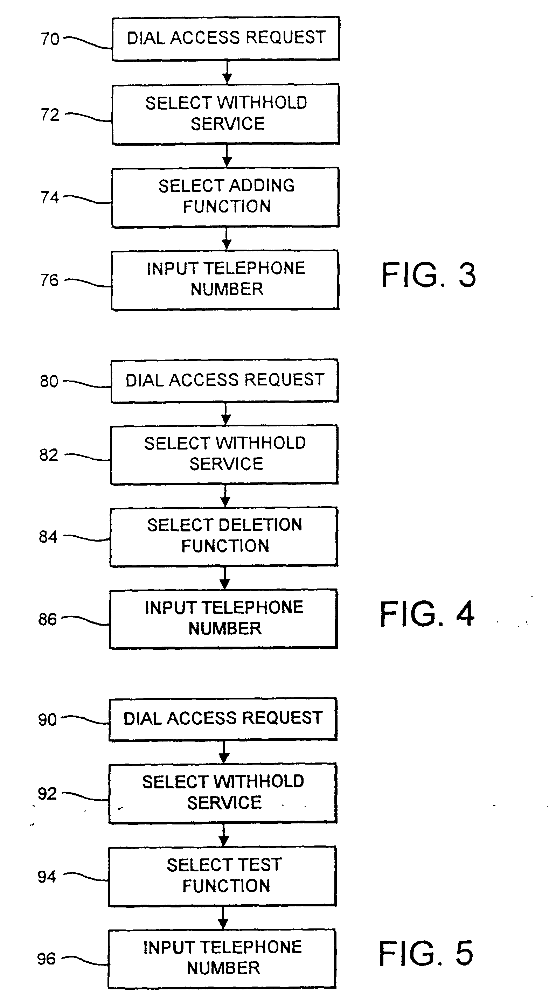

Figures 3-5 are a series of flow charts, illustrating how a user may alter and check the contents of the stored lists. These figures refer to the list of numbers from which the subscriber's own number will be withheld. It will be appreciated that exactly analogous procedures apply when adding a number to the list of numbers to which the subscriber's own number should be transmitted.

Figure 3 shows the procedure for adding a number to the list of numbers from which the subscriber's own number will be withheld. In step 70, the subscriber dials the access code for the management service. The call may be directed to a human operator, who obtains the necessary information from the subscriber, and inputs the necessary data into the system to make any changes to the stored lists. Alternatively, the call may be connected to an intelligent terminal, provided with voice recognition software and means for playing announcements to the subscriber, to obtain the necessary information. A further possibility is that the terminal may play announcements to the subscriber, and request that the subscriber enter data by DTMF dialling, with the terminal then recognising the input digits. In step 72, the subscriber selects the service which he requires, in this case altering the list of numbers from which his own number will be withheld. In step 74, the subscriber indicates that he wishes to add a number to the list. (If no such list already exists, a list is created as soon as one number is stored.) The system may set a maximum size for each list but, assuming that this maximum has not been reached in this case, the subscriber is then asked to input the telephone number, identifying the called party from which his own number will be withheld, and the number is input in step 76.

The number which is input by the subscriber in step 76 may be a complete telephone number, defining one called party, or may be a partial telephone number, which defines a group of potential called parties. For example, an organisation might have a PBX which allows direct dialling in. To call a party connected to such an exchange, it may for example be necessary to dial the number 0111 NNN YYYY, where 0111 is the national code, NNN identifies the PBX, and YYYY is the extension number within the PBX.

If a subscriber using the selecting withhold service wishes his number to be withheld from all extension numbers in the PBX, he may store the partial number 0111 NNN, which then means that the subscriber's number is withheld from all extension numbers.

Similarly, the subscriber may decide that he wishes to withhold his number from any organisation which has a Freephone number. In that case, he only needs to store the Freephone access code. Thus, in the U.K., all Freephone numbers offered by one service provider are in the form 0800 NNNNNN. If the subscriber stores 0800 in his list, his number will be withheld from all called parties with a number beginning with these digits.

Figure 4 shows the procedure for a subscriber to delete a number from the list of numbers, from which his own number will be withheld. In step 80, the subscriber dials the access request code. In step 82, he selects the selective withholding service, as opposed to selective release. In step 84 he indicates that he wishes to delete a number from the list, and in step 86 he inputs the number that is to be deleted.

It is also possible for the subscriber to indicate in a single operation that all stored numbers should be deleted.

Figure 5 shows a procedure for testing the stored numbers. In step 90, the subscriber dials the access request code. In step 92 he indicates that it is the list of numbers, from which his own number is to be withheld, which he wishes to interrogate. In step 94, he indicates that he wishes to carry out a test function, and in step 96 he inputs the telephone number of interest. The subscriber then receives a message, either from an operator, or via a recorded announcement, indicating whether or not the input number appears on the relevant list.

It is also possible for the subscriber to request that a complete listing of all stored numbers be given.

The invention thus provides a way for a subscriber to control the way in which his telephone number is released to called parties, without requiring him to remember to withhold his number each time he wishes to make a call.

## Claims

1. A method of handling a telephone call from a calling party identified by a first telephone number to a called party identified by a second telephone number, the method comprising comparing the second telephone number with a list of stored numbers, and transmitting the first telephone number to a called party only if the second telephone number appears on the list.

2. A method as claimed in claim 1, wherein the list of stored numbers includes partial numbers, and the method comprises transmitting the first telephone number to the called party if the relevant part of the second telephone number appears on the list.

3. A method of handling a telephone call from a calling party identified by a first telephone number to a called party identified by a second telephone number, the method comprising comparing the second telephone number with a list of stored numbers, and withholding the first telephone number from a called party only if the second telephone number appears on the list.

4. A method as claimed in claim 3, wherein the list of stored numbers includes partial numbers, and the method comprises withholding the first telephone number from the called party if the relevant part of the second telephone number appears on the list.

5. A method of handling a telephone call from a calling party identified by a first telephone number to a called party identified by a second telephone number, the method comprising setting as a default mode either withholding the first telephone number from, or transmitting the first telephone number to, the called party, the method comprising:
where the default is to withhold the number, comparing the second telephone number with a first list of stored numbers, and transmitting the first telephone number to a called party only if the second telephone number appears on the first list; and
where the default is to transmit the number, comparing the second telephone number with a second list of stored numbers, and withholding the first telephone number from a called party only if the second telephone number appears on the second list.

6. A telephone exchange, comprising means associated with each subscriber connected thereto for storing a list of telephone numbers, the telephone number of the respective subscriber being withheld from the called party in the case of calls made to telephone numbers which appear on the list.

7. A telephone exchange as claimed in claim 6, wherein the exchange is a private exchange for connection to a network, and comprises means for transmitting to the network a code for withholding the subscriber's number from the called party.

8. A telephone exchange as claimed in claim 6, comprising means for storing partial telephone numbers, the telephone number of the respective subscriber being withheld from the called party in the case of calls made to telephone numbers, parts of which correspond to partial numbers which appear on the list.

9. A telephone exchange, comprising means associated with each subscriber connected thereto for storing a list of telephone numbers, the telephone number of the respective subscriber being transmitted to the called party in the case of calls made to telephone numbers which appear on the list.

10. A telephone exchange as claimed in claim 9, wherein the exchange is a private exchange for connection to a network, and comprises means for transmitting to the network a code for transmitting the subscriber's number to the called party.

11. A telephone exchange as claimed in claim 9, comprising means for storing partial telephone numbers, the telephone number of the respective subscriber being transmitted to the called party in the case of calls made to telephone numbers, parts of which correspond to partial numbers which appear on the list.

12. A telephone exchange, comprising means associated with each subscriber connected thereto for allowing the subscriber to indicate whether a default is that his number should be transmitted to, or withheld from, called parties, and further comprising means for storing first and second lists of telephone numbers, the telephone number of the respective subscriber being withheld from the called party in the case of calls made to telephone numbers which appear on the first list when the default is that the number should be transmitted, and being transmitted to the called party in the case of calls made to telephone numbers which appear on the list when the default is that the number should be withheld.

13. A telephone, for use by a subscriber identified by a telephone number, comprising means for storing a list of telephone numbers, the telephone number of the subscriber being withheld from the called party in the case of calls made to telephone numbers which appear on the list.

14. A telephone, for use by a subscriber identified by a telephone number, comprising means for storing a list of telephone numbers, the telephone number of the subscriber being transmitted to the called party in the case of calls made to telephone numbers which appear on the list.

15. A telephone exchange, having a plurality of subscribers connected thereto, each identified by a telephone number, the exchange comprising means for connecting any one of said subscribers to a called party identified by a called telephone number, and means for storing a list of telephone numbers associated with each subscriber connected to the exchange, and further comprising means for transmitting the telephone number of said one subscriber to said called party only if the telephone number of said called party appears on the list of telephone numbers associated with said one subscriber.

16. A telephone exchange, having a plurality of subscribers connected thereto, each identified by a telephone number, the exchange comprising means for connecting any one of said subscribers to a called party identified by a called telephone number, and means for storing a list of telephone numbers associated with each subscriber connected to the exchange, and further comprising means for withholding the telephone number of said one subscriber from said called party only if the telephone number of said called party appears on the list of telephone numbers associated with said one subscriber.
